# EUROPÄISCHE PATENTANMELDUNG

(11) **EP 2 669 042 A1**
(43) Veröffentlichungstag der Anmeldung: **04.12.2013**
(21) Anmeldenummer: 13164435.3
(22) Anmeldetag: 19.04.2013
(51) Int. Cl.: B23P 15/00, B23C 3/18, F01D 5/04, F04D 29/28

(54) **Verfahren zur Herstellung eines Werkstücks mittels einer Zerspanvorrichtung**

(30) Priorität: 30.05.2012 EP 12170048
(71) Anmelder: Sulzer Markets and Technology AG, 8401 Winterthur (CH)
(72) Erfinder: Ohnútek, Radko, 8702 Zollikon (CH); Kränzler, Thomas, 88682 Salem (DE); Adam, Reto, 8421 Dättlikon (CH)
(74) Vertreter: Sulzer Management AG

(57) **Zusammenfassung**

Die Erfindung betrifft ein Verfahren zur Herstellung eines Werkstücks mit mindestens einer inneren Kavität (7) mittels einer Zerspanvorrichtung, welches die folgenden Schritte umfasst:
- Aufteilen des Werkstücks in mindestens ein erstes und ein zweites Subvolumen (11,12), welche an einer Trennfläche (10) aneinander grenzen, wobei die Subvolumina (11,12) so festgelegt werden, dass die Trennfläche (10) zwischen benachbarten Subvolumina (11,12) keine der Begrenzungsflächen (8) der Kavität (7) umfasst oder schneidet, und dass das erste Subvolumen (11), welches die Kavität (7) umfasst, integral zerspanend gefertigt werden kann,
- integral zerspanende Herstellung des die Kavität (7) umfassenden ersten Subvolumens (11) mittels der Zerspanvorrichtung,
- Aufbauen des zweiten Subvolumens (12) auf dem ersten Subvolumen (11) oder Fügen des ersten und des zweiten Subvolumens (11,12).

## Beschreibung

Die Erfindung betrifft ein Verfahren zur Herstellung eines Werkstücks mit mindestens einer inneren Kavität mittels einer Zerspanvorrichtung, sowie ein Werkstück hergestellt nach einem solchen Verfahren gemäss dem Oberbegriff des unabhängigen Anspruchs der jeweiligen Kategorie.

Es ist bekannt, rotierende Laufräder, Pumpenräder, Impeller, sowie feststehende Diffusoren oder Leiträder für Pumpen, Kompressoren, Verdichter oder Turbinen aus einem Rohling durch spanabhebende Bearbeitung herauszuarbeiten. Dabei kann der Rohling als Vollmaterial vorliegen oder durch einen urformenden Fertigungssprozess bereits vorbearbeitet sein.

Ein solches Verfahren ist beispielsweise aus der EP-B-2 012 957 bekannt. Das dort vorgeschlagene Verfahren zeichnet sich insbesondere dadurch aus, dass es eine integrale zerspanende Herstellung des Werkstücks ermöglicht, womit gemeint ist, dass das Werkstück gesamthaft aus dem Rohling mittels einer Zerspanvorrichtung zumindest im Wesentlichen in die gewünschte Endform gebracht wird. Das Zusammenfügen von vorgefertigten Bauteilen, beispielsweise mittels Schweissens, ist bei einer solchen integralen Herstellung nicht mehr notwendig. Dies ist insbesondere deshalb vorteilhaft, weil Schweissnähte oder andere Verbindungsstellen an stark belasteten Teilen des Werkstücks im Betriebszustand eine Schwachstelle darstellen, die Ursache eines Risses oder einer anderen Schädigung des Werkstücks sein kann.

Somit ist insbesondere bei hoch belasteten Bauteilen eine integrale zerspanende Herstellung vorteilhaft. Daher werden solche Bauteile wie beispielsweise Laufräder (Impeller) von Pumpen aus massivem Material, je nach Anwendung z.B. aus hochfesten Edelstählen, Superlegierungen, anderen geeigneten Metallen oder Metalllegierungen oder auch aus nicht metallischen Werkstoffen, beispielsweise keramischen, gefertigt und die Schaufeln des Laufrads werden durch spanabhebende Bearbeitung, z.B. durch Fräsen, aus diesem Material herausgearbeitet.

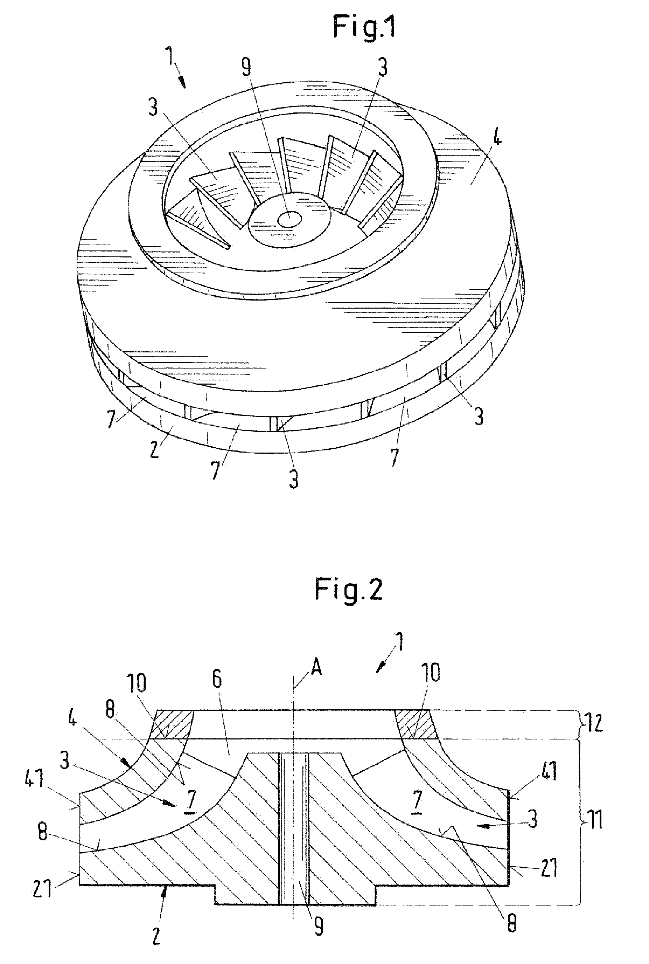

Wie dies auch in der EP-B-2 012 957 bereits dargelegt wird, ist jedoch manchmal aus rein geometrischen Gründen eine integrale zerspanende Herstellung des Werkstücks nicht möglich. Dies kann beispielsweise der Fall sein, wenn die Laufräder (Impeller) als gedeckte Laufräder ausgestaltet sind (siehe z. B. Fig. 1). Bei einer solchen Ausgestaltung umfasst das Laufrad einer Nabenscheibe, auf welcher die Schaufeln angeordnet sind und ferner eine Deckscheibe, welche die Schaufeln auf Ihrer der Nabenscheibe abgewandten Seite teilweise überdeckt. Somit bilden sich zwischen den Schaufeln geschlossene Kanäle aus, die sich jeweils vom Innenraum des Laufrads bis an seine äussere Oberfläche erstrecken.

Selbst wenn man in Betracht zieht, dass man mit der Zerspanvorrichtung diese Kanäle von beiden Seiten, also vom Innenraum des Laufrads als auch von seiner äusseren Oberfläche her aus dem Rohling fräsen bzw. zerspanend bearbeiten kann, so ist klar, dass die Geometrie hier Grenzen setzt und in vielen Fällen eine integrale zerspanende Herstellung unmöglich macht.

In solchen Fällen, in denen es aus rein geometrischen Gründen nicht mehr möglich oder praktikabel ist, das Laufrad insgesamt in einem Stück aus massivem Material zu fräsen, ist es daher Stand der Technik, zunächst aus einem Rohling die Nabenscheibe und die Schaufeln zerspanend herauszuarbeiten. Die Kanäle zwischen den Schaufeln sind dann ja offene Kanäle, die in einfacher Weise herstellbar sind. Anschliessend wird die Deckscheibe aufgelegt und mit der Nabenscheibe bzw. den Schaufeln gefügt, beispielsweise verschweisst. Die Schweissnähte bzw. die Fügestellen verlaufen dann jeweils dort, wo die Schaufeln mit der Deckscheibe in Kontakt kommen. Dies bringt jedoch den Nachteil mit sich, dass gerade an dieser Stelle im Betriebszustand die Belastungen besonders hoch bzw. kritisch sind. Daher ist dieser Grenzbereich zwischen den Schaufeln und der Deckplatte auch besonders anfällig für Fügefehler, die manchmal bei der Herstellung gar nicht bemerkt werden.

Dieses anhand gedeckter Laufräder erläuterte Problem gibt es aber auch bei anderen Werkstücken, die eine innere Kavität aufweisen, beispielsweise einen inneren Kanal oder eine innere Bohrung, deren Lage oder Geometrie derart ist, dass eine integrale zerspanende Herstellung insbesondere aus geometrischen Gründen nicht möglich oder nicht praktikabel ist. Als nur ein Beispiel seien hier Kühlluftbohrungen in Turbinenschaufeln genannt.

Ausgehend von diesem Stand der Technik ist es daher eine Aufgabe der Erfindung, ein Verfahren zur Herstellung eines Werkstücks mit mindestens einer inneren Kavität mittels einer Zerspanvorrichtung vorzuschlagen, mit welchem insbesondere auch solche Werkstücke herstellbar sind, die aus geometrischen Gründen keine integrale zerspanende Herstellung zulassen, wobei das Verfahren eine erhöhte Zuverlässigkeit des Werkstücks im Betriebszustand ermöglichen soll. Ferner soll durch die Erfindung ein entsprechendes Werkstück vorgeschlagen werden.

Die diese Aufgabe lösenden Gegenstände der Erfindung sind durch die Merkmale der unabhängigen Ansprüche gekennzeichnet.

Erfindungsgemäss wird also ein Verfahren vorgeschlagen zur Herstellung eines Werkstücks mit mindestens einer inneren Kavität mittels einer Zerspanvorrichtung, welches die folgenden Schritte umfasst:
- Aufteilen des Werkstücks in mindestens ein erstes und ein zweites Subvolumen, welche an einer Trennfläche aneinander grenzen, wobei die Subvolumina so festgelegt werden, dass die Trennfläche zwischen benachbarten Subvolumina keine der Begrenzungsflächen der Kavität umfasst oder schneidet, und dass das erste Subvolumen, welches die Kavität umfasst, integral zerspanend gefertigt werden kann,
- integral zerspanende Herstellung des die Kavität umfassenden ersten Subvolumens mittels der Zerspanvorrichtung,
- Aufbauen des zweiten Subvolumens auf dem ersten Subvolumen oder Fügen des ersten und des zweiten Subvolumens.

Gemäss dem erfindungsgemässen Verfahren erfolgt also zunächst eine Modularisierung des Werkstücks, bei welchem dieses in mindestens zwei Subvolumina unterteilt wird, die an einer Trennfläche aneinandergrenzen. Dadurch, dass die Trennfläche keine der Begrenzungsflächen der Kavität umfasst oder schneidet, ist gewährleistet, dass die innere Kavität frei von Fügestellen ist. Mit dem Begriff "Fügestelle" ist dabei gemeint, dass es die Grenzfläche oder -linie zwischen zwei Subvolumen ist, die als separate Körper zunächst hergestellt und dann miteinander verbunden werden, oder die Begrenzungsfläche eines Subvolumens, auf welcher ein anderes Subvolumen aufgebaut wird. Erfahrungsgemäss ist es so, dass im Betriebszustand die Begrenzungsflächen der inneren Kavität den höchsten Beanspruchungen ausgesetzt sind, sodass hier am ehesten mit einer Beschädigung, beispielsweise einer Rissbildung zu rechnen ist. Da erfindungsgemäss die innere Kavität des Werkstücks frei von Fügestellen ist resultiert eine erhöhte Belastbarkeit und damit eine höhere Zuverlässigkeit des Werkstücks im Betriebszustand. Ferner bedeutet die Verlagerung der Fügestelle oder der Fügestellen in einen Bereich ausserhalb der Begrenzungsflächen der inneren Kavität eine Reduktion des Fertigungsrisikos. In der Fertigung reagieren die meisten Fügeverfahren sehr empfindlich auf kleinste Änderungen der Prozessparameter. Bei dem erfindungsgemässen Verfahren ist eine Korrektur von Fügefehlern viel einfacher durchführbar als bei bisher bekannten gattungsgemässen Verfahren.

Da das die innere Kavität enthaltende Subvolumen integral zerspanend gefertigt werden kann resultiert in aller Regel auch eine höhere geometrische Genauigkeit des betriebsrelevanten Bereichs des Werkstücks, also insbesondere der inneren Kavität, im Vergleich zu solchen Verfahren, bei denen die Begrenzungsfläche der inneren Kavität eine Fügestelle umfasst.

Eine bevorzugte Variante des erfindungsgemässen Verfahrens besteht darin, dass das zweite Subvolumen mittels eines auftragenden Bearbeitungsverfahrens, insbesondere mittels Auftragschweissens, speziell mittels Laserauftragschweissens auf dem ersten Subvolumen aufgebaut wird. Zunächst erfolgt also die integral zerspanende Herstellung des die Kavität umfassenden ersten Subvolumens mittels der Zerspanvorrichtung, anschliessend wird auf der die Trennfläche bildenden Oberfläche des ersten Subvolumens das zweite Subvolumen aufgebaut.

Gemäss einem besonders bevorzugten Ausführungsbeispiels werden die Subvolumina nach ihrer jeweiligen Herstellung gefügt, d. h. zunächst werden die mindestens zwei Subvolumina jeweils als separate Bauteile gefertigt und anschliessend gefügt.

Aus praktischen Gründen ist es vorteilhaft, wenn die Fügung der Subvolumina mittels eines thermischen Fügevorgangs erfolgt, insbesondere mittels Schweissens, Lichtbogenschweissens, Laserschweissens, Elektronenstrahlschweissens, Reibschweissens oder Lötens.

Je nach Anwendung kann es jedoch auch vorteilhaft sein, wenn die Subvolumina mittels Klebens, Schraubens oder Nietens miteinander gefügt werden, weil diese besonders einfache Fügeverfahren sind. Dies kann zudem vorteilhaft sein, wenn auf eine thermische Belastung der Trennfläche verzichtet werden soll.

Das erfindungsgemässe Verfahren eignet sich insbesondere auch für ein solches Werkstück, bei welchem die Kavität einen geschlossenen Kanal umfasst, welcher sich von einem Innenraum des Werkstücks bis an seine äussere Oberfläche erstreckt.

Ein für die Praxis besonders relevantes Werkstück, das mittels des erfindungsgemässen Verfahrens vorteilhaft herstellbar ist, ist ein Impeller oder ein Leitrad, insbesondere ein Impeller oder ein Leitrad einer Pumpe, eines Kompressors, eines Verdichters oder einer Turbine.

Speziell vorteilhaft ist das Verfahren, wenn das Werkstück ein gedeckter Impeller (Laufrad) ist, der eine Nabenscheibe, mehrere Schaufeln und eine Deckscheibe umfasst. Solche gedeckten Impeller werden insbesondere in der Turbomaschinenindustrie als axiale oder radiale Laufräder für Kompressoren, Pumpen, Verdichter oder Turbinen eingesetzt. Aber auch die entsprechenden statischen, d.h. im Betriebszustand feststehenden Teile, also beispielsweise axiale oder radiale gedeckte Diffusoren oder Leiträder sind vorteilhaft mit dem erfindungsgemässen Verfahren herstellbar.

Im Falle von Impelleren oder Diffusoren ist es fertigungstechnisch vorteilhaft, die Trennfläche senkrecht zur Achse des Impellers bzw, Diffusors liegt. Dabei ist es im Falle gedeckter Impeller oder Diffusoren bevorzugt, wenn das erste Subvolumen die Nabenscheibe und die Schaufeln umfasst oder wenn die Trennfläche vollständig in der Deckscheibe liegt.

Durch die Erfindung wird ferner ein Werkstück vorgeschlagen, insbesondere ein Impeller oder ein Leitrad für eine Pumpe, einen Kompressor, einen Verdichter oder eine Turbine, welches nach einem erfindungsgemässen Verfahren hergestellt ist, wobei das Werkstück mindestens einen geschlossenen Kanal umfasst. Ein solches erfindungsgemässes Werkstück zeichnet sich dadurch aus, dass die Begrenzungsfläche jeder inneren Kavität frei von Fügestellen ist, wodurch die Betriebssicherheit erhöht wird.

Weitere vorteilhafte Massnahmen und bevorzugte Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Darstellung zeigen teilweise im Schnitt:

Im folgenden wird die Erfindung an Hand der Zeichnung näher erläutert. Es zeigen in schematischer Darstellung:
- Fig. 1:: eine perspektivische Darstellung eines Impellers, der gemäss einem Ausführungsbeispiel eines erfindungsgemässen Verfahrens hergestellt ist, und
- Fig. 2:: einen Schnitt durch den Impeller aus Fig. 1 entlang der Drehachse des Impellers.

Das erfindungsgemässe Verfahren dient zur Herstellung eines Werkstücks mit mindestens einer Kavität mittels einer Zerspanvorrichtung. Im Folgenden wird mit beispielhaftem Charakter auf ein für die Praxis wichtiges Beispiel Bezug genommen, bei welchem das Werkstück ein gedeckter Impeller (Laufrad) einer Turbomaschine ist. Fig. 1 zeigt in einer perspektivischen Ansicht einen solchen Impeller, der gesamthaft mit dem Bezugszeichen 1 versehen ist. Fig. 2 zeigt zum besseren Verständnis den Impeller 1 in einer Schnittdarstellung entlang der Drehachse A, um welche der Impeller 1 im Betriebszustand rotiert. Der Impeller 1 umfasst in an sich bekannter Weise eine Nabenscheibe 2, mit welcher er üblicherweise auf einer nicht dargestellten Achse montiert oder befestigt wird, ferner mehrere Schaufeln 3, die auf der Nabenscheibe 2 angeordnet sind, sowie eine Deckscheibe 4, welche die Schaufeln 3 auf ihrer der Nabenscheibe 2 abgewandten Seite bzw. Kante zumindest teilweise überdeckt. Dabei erstreckt sich die Deckscheibe 4 bezüglich der durch die Drehachse A festgelegten axialen Richtung darstellungsgemäss (Fig. 2) höher als die Nabenscheibe 2. Dadurch ist darstellungsgemäss oberhalb der Schaufeln 3 ein Innenraum 6 ausgebildet, der bezüglich der Umfangsrichtung von der Deckscheibe 4 begrenzt wird. Somit existiert jeweils zwischen zwei benachbarten Schaufeln 3 eine innere Kavität 7, von der jede hier als geschlossener Kanal 7 ausgestaltet ist, der sich jeweils von dem Innenraum 6 bis zu der radial äusseren Oberfläche des Impellers 1 erstreckt, welche die radial äusseren Oberflächen 41 und 21 der Deckscheibe 4 und der Nabenscheibe 2 umfasst. Jeder dieser geschlossenen Kanäle 7 ist somit von einer Begrenzungsfläche 8 umschlossen, die sich jeweils aus den einander zugewandten Oberflächen zweier benachbarter Schaufeln 3, sowie den dazwischenliegenden Oberflächensegmenten der einander zugewandten Oberflächen der Nabenscheibe 2 und der Deckscheibe 4 zusammensetzt.

Der Impeller 1 weist zudem eine zentrale axiale Bohrung 9 auf, welche zur Aufnahme einer Welle oder einer Achse dient, auf welcher der Impeller 1 montiert werden kann.

Gemäss dem erfindungsgemässen Verfahren wird der Impeller 1 zunächst in mehrere Subvolumina aufgeteilt, hier in zwei, nämlich in ein erstes

Subvolumen 11 und ein zweites Subvolumen 12. Diese beiden Subvolumen 11, 12 grenzen an einer Trennfläche 10 aneinander. Dabei werden das erste und das zweite Subvolumen 11 bzw. 12 nach den folgenden beiden Kriterien festgelegt:
- die Trennfläche 10 zwischen benachbarten Subvolumina 11 und 12 umfasst oder schneidet keine der Begrenzungsflächen 8, welche jeweils eine der inneren Kavitäten, hier der geschlossenen Kanäle 7, begrenzen
- das erste Subvolumen 11, welches die Kavität 7 bzw. die Kavitäten 7 umfasst - hier also die Kanäle 7 - wird so festgelegt, dass es integral zerspanend mittels einer Zerspanvorrichtung gefertigt werden kann.

Diese Zerlegung des Werkstücks 1 in mehrere Subvolumina 11, 12 kann zeichnerisch beispielsweise auf einer Konstruktionszeichnung durchgeführt werden oder auch computergestützt, beispielsweise in einem CAD-Programm, oder auf andere Weise vorzugsweise mittels eines Computers erfolgen.

Wie dies Fig. 2 zeigt, ist im vorliegenden Ausführungsbeispiels des Impellers 1 die Trennfläche 10 zwischen dem ersten und dem zweiten Subvolumen 11 bzw. 12 so gewählt, dass sie senkrecht zur Drehachse A liegt und vollständig innerhalb der Deckscheibe 4 liegt. Das erste Subvolumen 11 umfasst also, wie in Fig. 2 ersichtlich, die Nabenscheibe 2, sämtliche Schaufeln 3 sowie einen Teil der Deckscheibe 4, während das zweite Subvolumen 12 den verbleibenden Teil der Deckscheibe 4 umfasst. Wie bereits erwähnt, ist die Trennfläche 10 so gewählt, dass es möglich ist, das erste Subvolumen 11 integral zerspanend herzustellen. Dies ist in erster Linie ein geometrisches Kriterium. Von der Deckscheibe 4 wird soviel dem zweiten Subvolumen 12 zugeordnet, dass es möglich ist, mit einer nicht dargestellten Zerspanvorrichtung jeden der geschlossenen Kanäle 7 aus einem Rohling herauszuarbeiten. Dabei kann die Zerspanvorrichtung vom Innenraum 6 her angesetzt werden oder von den radial äusseren Oberflächen 21, 41 oder auch wechselweise von beiden Seiten.

Mit dem Begriff der "integral zerspanenden Herstellung" ist dabei gemeint, dass das erste Subvolumen 11 mittels eines zerspanenden Bearbeitungsverfahrens aus einem Rohling heraus zumindest im Wesentlichen in die gewünschte Endform gebracht wird. Natürlich kann es sein, dass nach der zerspanenden Herstellung noch Nachbearbeitungsschritte, wie beispielsweise Polieren, oder Wärmebehandeln oder ähnliches durchgeführt werden, aber die wesentliche Formgebung des ersten Subvolumens 11 und insbesondere der Kanäle 7 ist nach der integral zerspanenden Herstellung abgeschlossen.

Wie die integral zerspanende Herstellung durchgeführt werden kann, ist dem Fachmann hinreichend bekannt. So wird beispielsweise in der schon zitierten EP-B-2 012 957 ein solches Zerspanverfahren offenbart.

Das Material, aus dem das Werkstück 1 nach einem erfindungsgemässen Verfahren hergestellt wird, ist bevorzugt ein Metall oder eine Metalllegierung und ist im Speziellen z.B. Aluminium, Titan, Stahl, Nickel, eine Nickel- oder Cobalt-Basislegierung, Magnesium, Schmiede- oder Gussmaterial, ein Bundmetall oder ein anderes Material, zum Beispiel ein Kunststoff oder ein Verbundmaterial oder ein anderes zerspanbares Material.

Zur Herstellung des Impellers 1 wird nun wie folgt vorgegangen. Nachdem vorgängig die Trennfläche 10 zwischen dem ersten und dem zweiten Subvolumen 11 bzw. 12 festgelegt worden ist, wird zunächst das erste Subvolumen 11 mittels einer Zerspanvorrichtung, die beispielsweise eine computergesteuerte Fräswerkzeug umfasst, aus einem Rohling herausgearbeitet. Dabei kann der Rohling als Vollmaterial vorliegen oder durch einen urformenden Fertigungsprozess bereits vorbearbeitet sein.

Das erste Subvolumen 11 liegt zu Beginn der Herstellung als Vollkörper vor und wird dann mittels des Fräswerkzeugs in die gewünschte Endform gebracht. Üblicherweise wird das Fräswerkzeug von einem Manipulator geführt, wobei die Führung computergestützt erfolgt. Zur Herstellung jedes der geschlossenen Kanäle 7 wird das Materialvolumen zwischen der späteren Begrenzungsfläche 8 dieses geschlossenen Kanals spanabhebend entfernt. Das Fräswerkzeug wird also zwischen der Naben- und Deckenscheibe 2 bzw. 4 so geführt, dass zwischen der druckseitigen und der saugseitigen Oberfläche zweier benachbarter Schaufeln 3 und zwischen der Nabenscheibe 2 und der Deckscheibe 4 der geschlossene Kanal 7 herausgearbeitet wird. Dabei wird darauf geachtet, dass das Fräswerkzeug die Begrenzungsfläche 8 des Kanals 7 nicht beschädigt.

Auf diese Weise wird das erste Subvolumen 11 aus dem Rohling herausgearbeitet.

Das zweite Subvolumen 12 ist im vorliegenden Ausführungsbeispiel ein im Wesentlichen ringförmiger Körper, nämlich ein Teil der Deckplatte 4.

Für den weiteren Herstellungsprozess des Impellers 1 sind zwei Varianten bevorzugt.

Gemäss der ersten Variante wird nach der integral zerspanenden Herstellung des ersten Subvolumens 11 das zweite Subvolumen 12 auf der Trennfläche 10 mittels eines auftragenden Bearbeitungsverfahrens aufgebaut, bis die gewünschte Endform des Impellers 1 erreicht ist. Solche auftragenden Bearbeitungsverfahren sind dem Fachmann hinreichend bekannt und bedürfen daher keiner näheren Erläuterung. Insbesondere sind hierfür Auftragschweissverfahren, speziell Inert-Gas-Verfahren wie Wolfram-Inert-Gas-Schweissen (WIG) oder Laserauftragschweissen, oder auch Plasmaverfahren geeignet.

Gemäss der zweiten Variante wird das zweite Subvolumen 12 zunächst als separates Bauteil gefertigt. Dies erfolgt vorzugsweise auch mittels einer integral zerspanenden Herstellung. Nachdem das erste und das zweite Subvolumen 11 bzw. 12 jeweils als separate Bauteile hergestellt sind, werden sie gefügt. Das Fügen der Subvolumina 11,12 erfolgt vorzugsweise mittels eines thermischen Fügeverfahrens wie beispielsweise Löten oder Schweissen, insbesondere Lichtbogenschweissen, Inertgasschweissen, Laserschweissen, Elektronenstrahlschweissen, Reibschweissen.

Je nach Material und Anwendungsfall sind aber auch alternativ oder ergänzend andere Fügeverfahren vorteilhaft, beispielsweise Kleben, Schrauben, Nieten.

Nachdem auf diese Weise der Impeller 1 gefertigt ist können optional noch weitere Behandlungsschritte durchgeführt werden, beispielsweise Wärmebehandlungen oder Oberflächenbehandlungen wie Beschichten, Streichen, Lackieren.

Ein besonderer Vorteil des erfindungsgemässen Verfahrens ist es, dass die Begrenzungsflächen der gedeckten Kanäle 7 bzw. allgemeiner die Begrenzungsflächen der inneren Kavitäten frei von Fügestellen sind. Da regelmässig diese inneren Kavitäten im Betriebszustand zu den am stärksten belasteten Teilen des Werkstücks gehören und Fügestellen potenzielle Schwachstellen sind, resultiert bei Werkstücken, die gemäss einem erfindungsgemässen Verffahren hergestellt sind, eine höhere Betriebssicherheit.

Es versteht sich, dass, insbesondere in Abhängigkeit von der Geometrie, das Werkstück 1 auch in mehr als zwei Subvolumina zerlegt werden kann. Natürlich ist das erfindungsgemässe Verfahren nicht auf die Herstellung von gedeckten Impellern beschränkt. Es eignet sich beispielsweise ebenso für die Herstellung von allen Arten von Impellern bzw. Laufrädern speziell in Turbomaschinen wie Pumpen, Kompressoren, Verdichtern, Turbinen, sowohl für axiale als auch für radiale Laufräder. In gleicher Weise ist das erfindungsgemässe Verfahren auch für Leiträder oder Diffussoren in solchen Turbomaschinen geeignet.

Das erfindungsgemässe Verfahren eignet sich aber auch für andere Werkstücke mit mindestens einer inneren Kavität. Diese muss auch nicht ein durchgängiger Kanal sein, es kann sich beispielsweise auch um eine Bohrung handeln, die im Material des Werkstücks endet, beispielsweise eine Sacklochbohrung. Die inner Kavität kann beispielsweise auch eine Kühlluftbohrung z.B. in einer Turbinenschaufel sein.

## Patentansprüche

1. Verfahren zur Herstellung eines Werkstücks mit mindestens einer inneren Kavität (7) mittels einer Zerspanvorrichtung, **dadurch gekennzeichnet, dass** es die folgenden Schritte umfasst:
- Aufteilen des Werkstücks in mindestens ein erstes und ein zweites Subvolumen (11,12), welche an einer Trennfläche (10) aneinander grenzen, wobei die Subvolumina (11,12) so festgelegt werden, dass die Trennfläche (10) zwischen benachbarten Subvolumina (11,12) keine der Begrenzungsflächen (8) der Kavität (7) umfasst oder schneidet, und dass das erste Subvolumen (11), welches die Kavität (7) umfasst, integral zerspanend gefertigt werden kann,
- integral zerspanende Herstellung des die Kavität (7) umfassenden ersten Subvolumens (11) mittels der Zerspanvorrichtung,
- Aufbauen des zweiten Subvolumens (12) auf dem ersten Subvolumen (11) oder Fügen des ersten und des zweiten Subvolumens (11,12).

2. Verfahren nach Anspruch 1, bei welchem das zweite Subvolumen (12) mittels eines auftragenden Bearbeitungsverfahrens, insbesondere mittels Auftragschweissens, speziell mittels Laserauftragschweissens auf dem ersten Subvolumen aufgebaut wird.

3. Verfahren nach Anspruch 1, bei welchem die Subvolumina (11,12) nach ihrer jeweiligen Herstellung gefügt werden.

4. Verfahren nach Anspruch 3, bei welchem die Fügung der Subvolumina (11,12) mittels eines thermischen Fügevorgangs erfolgt, insbesondere mittels Schweissens, Lichtbogenschweissens, Laserschweissens, Elektronenstrahlschweissens, Reibschweissens oder Lötens.

5. Verfahren nach einem der vorangehenden Ansprüche, bei welchem die Subvolumina (11,12) mittels Klebens, Schraubens oder Nietens miteinander gefügt werden.

6. Verfahren nach einem der vorangehenden Ansprüche, bei welchem die Kavität einen geschlossenen Kanal (7) umfasst, welcher sich von einem Innenraum (6) des Werkstücks bis an seine äussere Oberfläche(21,41) erstreckt.

7. Verfahren nach einem der vorangehenden Ansprüche, wobei das Werkstück ein Impeller oder ein Leitrad ist, insbesondere ein Impeller oder ein Leitrad einer Pumpe, eines Kompressors, eines Verdichters oder einer Turbine.

8. Verfahren nach einem der vorangehenden Ansprüche, bei welchem das Werkstück ein gedeckter Impeller ist, der eine Nabenscheibe (2), mehrere Schaufeln (3) und eine Deckscheibe (4) umfasst.

9. Verfahren nach Anspruch 8, bei welchem die Trennfläche (10) senkrecht zur Achse des Impellers liegt.

10. Verfahren nach Anspruch 8 oder 9, bei welchem das erste Subvolumen (11) die Nabenscheibe (2) und die Schaufeln (3) umfasst.

11. Verfahren nach einem der Ansprüche 8-10, bei welchem die Trennfläche (10) vollständig in der Deckscheibe (4) liegt.

12. Werkstück, insbesondere ein Impeller oder ein Leitrad für eine Pumpe, eine Kompressors, einen Verdichter oder eine Turbine, hergestellt nach einem Verfahren nach einem der Ansprüche 1 bis 11, wobei das Werkstück mindestens einen geschlossenen Kanal umfasst.
